# EUROPEAN PATENT SPECIFICATION

(11) **EP 0 538 979 B1**
(45) Date of publication and mention of the grant of the patent: **15.02.1995**
(21) Application number: 92304389.7
(22) Date of filing: 15.05.1992
(51) Int. Cl.: A01K 61/02

(54) **Feeding device having means to release food from within at pre-arranged intervals**
Futterautomat mit Vorrichtung für die Abgabe von Futter nach vorbestimmten Intervallen
Distributeur d'aliment poue des animaux avec un dispositif pour dégager l'aliment à intervalles préfixes

(30) Priority: 23.10.1991 US 781823
(43) Date of publication of application: 28.04.1993
(73) Proprietor: Jeng, Jieh-Chin, Yung-Kang Hsiang, Tainan Hsien (TW)
(72) Inventor: Jeng, Jieh-Chin, Yung-Kang Hsiang, Tainan Hsien (TW)
(74) Representative: Votier, Sidney David

(56) References cited:
- CH-A- 593 605
- GB-A- 2 240 020
- US-A- 4 324 203

## Description

This invention relates to a feeding device as disclosed in the prior art of CH-A-593605 and described in the first part of claim 1, it relates particularly to a feeding device which does not need a person to attend to it daily yet which can automatically release food stored therein at pre-set intervals.

Raising pets, such as birds in a cage or fishes in an aquarium, for recreation and as a hobby is increasingly popular among city dwellers. Some pets need careful attention, such as punctual and accurately proportioned feedings and regular change and circulation of the water in an aquarium. However, pet owners often forget to perform do these duties for a variety of reasons such as travel or mere forgetfulness. As a result, the pets can become ill or die of hunger.

It is a main object of the present invention to provide a feeding device to be used for pets which device does not need a person to attend to it personally but which can automatically release food stored within at pre-set intervals.

Accordingly, the feeding device of the present invention includes a casing which has an upper portion with a container to receive food therein and a lower portion with a top plate which has a first opening extending through the lower portion. The container has an outlet formed at the bottom of the same adjacent to the top plate of the lower portion. The lower portion includes a mounting shaft extending vertically therein and a rotary plate is rotatably mounted to the mounting shaft above the top plate, sealing the first opening of the top plate of the lower portion in a normal condition. The rotary plate includes a second opening formed therethrough, set off from the axis of rotation and substantially equal to the first opening of the top plate in size. The casing also includes a driving unit to rotate the rotary plate and a device to actuate the driving unit in a timely fashion so as to rotate the rotary plate an angular distance between a first position where the second opening of the rotary plate is in communication with the outlet of the container and a second position where the second opening of the rotary plate is in communication with the first opening of the top plate of the lower portion.

Other features and advantages of the present invention will become apparent in the following detailed description, including drawings, all of which show a non-limiting form of the invention, and of which:
Figure 1 shows a fragmentary cross sectional view of a feeding device of the present invention;
Figure 2 shows a top view of the feeding device of the present invention taken along the line II-II;

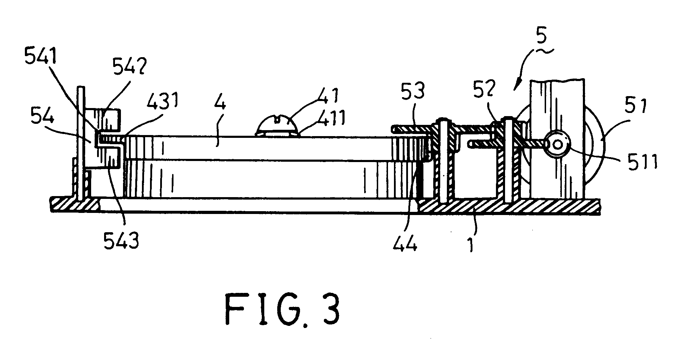

Figure 3 shows a cross sectional view of Figure 2 taken along the line III-III;
Figure 4 shows a side view of a section of another preferred embodiment of the feeding device of the present invention;
Figure 5 shows a partially exploded view of a container of a preferred embodiment of the feeding device of the present invention;
Figure 6 shows a partially enlarged view of the rotary plate which divides a preferred embodiment of the feeding device of the present invention into two portions; and
Figure 7 shows a partially enlarged view of the rotary plate which divides another preferred embodiment of the feeding device of the present invention into two parts.

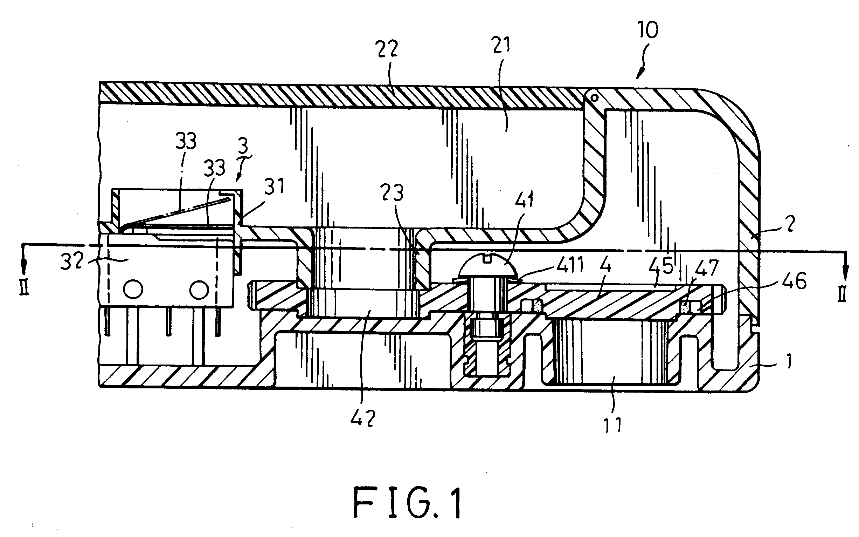

Referring to Figure 1, a fragmentary view of a feeding device of the present invention is shown to include a casing (10) composed of an upper portion (2) and a lower portion (1).

The upper portion (2) includes a container (21) having a receiving space to receive food therein and a lid (22) pivotally provided and covering the container (21). The container (21) has a bottom with an outlet (23) adjacent to the lower portion (1). The container (21) also includes a means for detecting a predetermined amount of food in the container, formed adjacent to the outlet (23) of the same which includes a restricted space (31) in which a resilient plate (33) and a micro switch (32) in association with the resilient plate (33) are provided. When the food has filled in the receiving space of the container (21), the weight of the food will compress the resilient plate (33) downward so that the micro switch (32) to which an alarm system is installed to detect the weight of the food in the container will not give out a warning signal. The arrangement to give out a warning signal upon detection of a certain weight is a known art, a detailed description of which is not necessary here. Upon detecting that the food in the container (21) needs refilling, that is, the food is less than it normally should be, the resilient plate (33) will pop up, as shown by perforated lines in Figure 1, connecting a circuit so that the warning signal is given out. The warning signal can either be a sound or a light, notifying the owner that it is time to refill the food in the container (21).

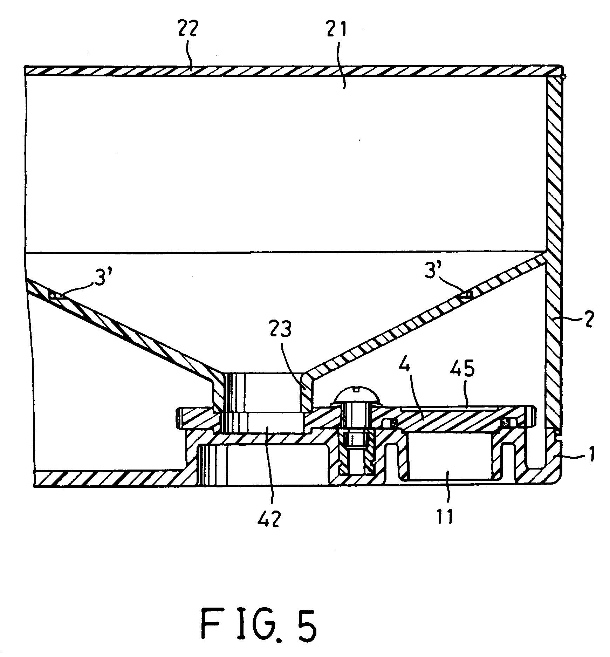

Referring to Figure 5, the means for detecting a predetermined amount of food in the container is an optoelectronic device (3') which can generate a warning signal upon detecting that the level or volume of the food in the container (21) has reached upon a predetermined low level, notifying the pet owner that it is time to refill the container (21).

The lower portion (1) has a top plate (not numbered) adjacent to and shielding the outlet (23) of the upper portion (2) from the lower portion (1). The top plate has a first opening (11) extending through the lower portion (1). A mounting shaft (41) extends vertically in the lower portion (1) and a rotary plate (4) is mounted securely to the mounting shaft (41) above the top plate such that the rotary plate (4) shields the first opening (11) of the top plate in a normal condition. The rotary plate (4) has a curved portion (45) on an upper side of the same with recessed bottom where a second opening (42) is formed through the recessed bottom. It is important to note that the second opening (42) is substantially equal to the first opening (11) of the top plate in size. The curved portion (45) confines an angular distance within which the second opening (42) travels, a detailed explanation of which will follow later.

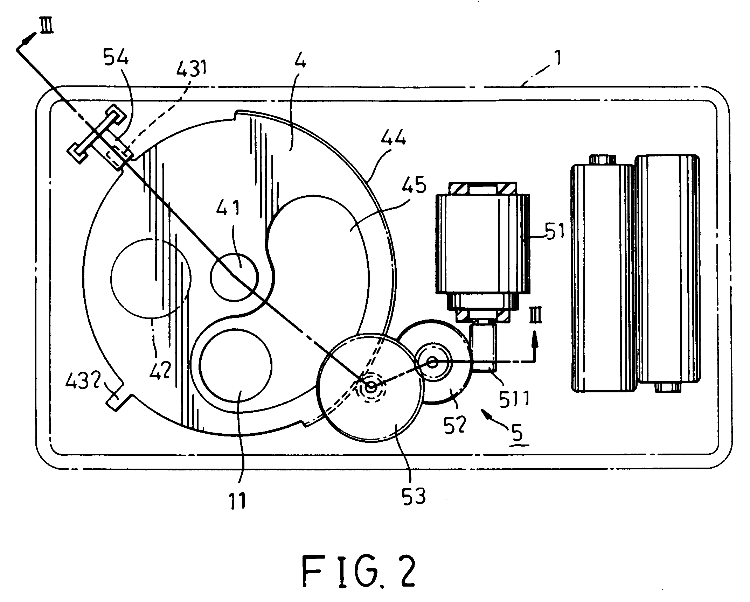

It is important to observe that the rotary plate (4) has a predetermined thickness such that the second opening (42) has a substantial depth thereof only then it can accommodate a substantial amount of food therein when the second opening (42) is aligned with the outlet (23) of the container (21). A resilient means (411), such as a clamping spring, is provided around and at the top of the vertical shaft (41) above the rotary plate (4) in such a manner that the clamping means urges the rotary plate (4) to abut against the top plate of the lower portion (1) so that the rotary plate (4) can rotate on the top plate in a balanced manner, as seen in Figure 2.

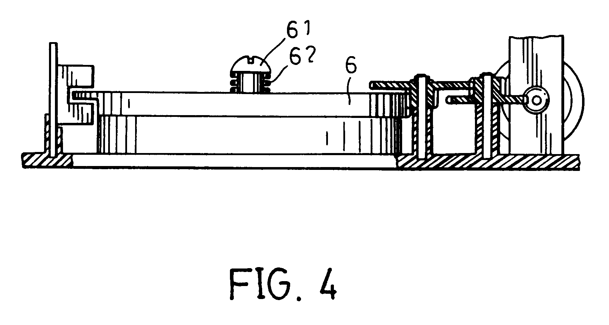

Referring to Figure 4, in one preferred embodiment of the invention, a compression spring (62) is mounted at the top of the vertical shaft (61) so as to urge the rotary plate (6) to abut against the top plate of the lower portion in a balanced manner. The feature and the objects are the same as those of the preceding embodiment.

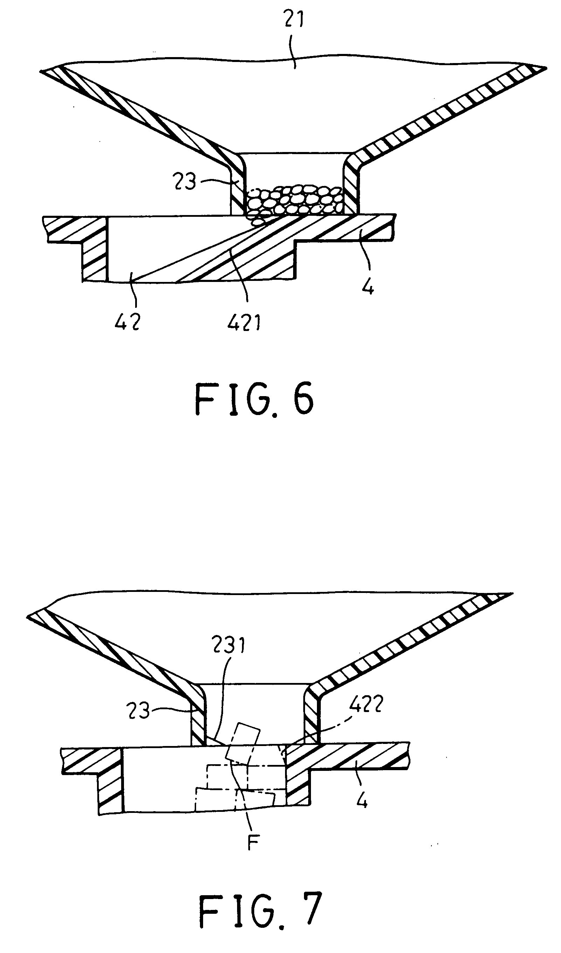

Referring to Figure 6, the second opening (42) of the rotary plate (4) can be provided with a gradually inclined surface (421) so that the food that overfills the second opening (42) of the rotary plate (4) is pushed slidably over the inclined surface (421) and back into the container (21). It is important to note that the inclined surface (421) of the rotary plate (2) should be disposed as shown, only then can the food be pushed back into the container (21) during the clockwise rotation of the rotary plate (4).

Some food includes particles of irregular shapes. When the second opening (42) of the rotary plate (4) is provided with an inclined surface (421), jamming of the food at the outlet (23) is greatly reduced.

Referring to Figure 7, a feed such as a sugar cane for feeding an elephant and the like may have an oblong shape which will often jam the second opening (42) of the rotary plate (4) relative to the outlet (23). In order to avoid such a problem, a cutter can be disposed adjacent to the outlet (23) at a place (231) in the container or at (422) in an inner wall of the second opening (42) so that if the food (F) is jammed thereat, the cutter can cut it into small pieces during the rotary plate (4) rotates and accommodating them in the second opening (42) of the rotary plate (4).

Referring again to Figures 1 and 2, on a lower side of the rotary plate (4), there is a seal retaining grooved recess (46) concentrically disposed around the second opening (42) which has an angular distance substantially equal to the angular distance within which the second opening (42) travels between the first and second positions, a detailed description of which is given in the following paragraphs. An O-shaped rubber ring (47) is provided in the seal retaining grooved recess (46) such that the first opening (11) of the top plate is sealed in a water tight relationship when the second opening (42) of the rotary plate (4) is not aligned with the first opening (11) of the top plate of the lower portion (1). This is necessary because some feed may soften when placed in the vicinity of water, such as when the casing is hung on the top of an aquarium, where humidity is bound to be plentiful.

The rotary plate (4) further has two spaced projections (431,432), each extending radially and outwardly from the periphery of the same and a toothed section (44) is also formed on the periphery, the reasons for which will be described hereinafter.

The casing (10) further has a driving means (5) such as motor (51) including a shaft (511) and rotation speed reducing gears (53,52), one of which is meshed with the toothed section (44) of the rotary plate (4) while the other one is in association with the shaft (511) of the driving means. The motor (51) is prearranged to be actuated at different intervals, such as at 12 hour intervals, by a known art. A sensing unit (54) which has a clearance (541) between first and second prongs (542,543) is provided on the topmost section of the lower portion (1). The first prong (542) is a light giving element and the second prong (543) is a light receiving element.

When the motor (51) is actuated at the pre-set time, the rotary plate (4) rotates an angular distance in a clockwise direction to a first position where the second opening (42) of the rotary plate (4) is aligned with the outlet (23) of the container (21) to receive the food, shown by perforated lines in Figure 2. During that time, the projection (431) of the rotary plate (4) is in the clearance (541) of the sensing unit (54), shielding the light emitting prong (542) from the light receiving prong (543). At this time, the sensing unit (54) will give out a signal ordering the motor (51) to rotate the rotary plate (4) in a counter-clockwise direction so as to rotate the rotary plate (4) to a second position where the second opening (42) of the rotary plate (4) is aligned with the first opening (11) of the top plate of the lower portion (1) to let out the food therefrom. The movement is repeated so that the feeding device of the present invention does not need individual attention but can still feed a pet automatically and punctually. In place of the sensing unit (54), a limit switch can also be employed in the present invention which can generate a first signal when in contact with the first projection (431), ordering the driving means (511) to rotate the rotary plate (4) in a clockwise direction, and a second signal, ordering the driving means to rotate rotary plate (4) in a counter-clockwise direction when in contact with the second projection (432). The feature and object are the same as in the previous embodiment.

A counter can also be attached to the limit switch so that whenever the projection of the rotary plate (4) contacts with the limit switch, the limit switch can generate a signal which is recorded in the counter, and the counter can be pre-arranged to generate a signal by a known art to stop the driving means upon reaching a predetermined number.

In addition, the limit switch can be pre-arranged by a known related art to connect electrically to a speech synthesizer system which can generate a sound when the driving means (511) stops rotating the rotary plate (4). The sound can imitated the voice of the pet owner coaxing the pet to eat and the like.

## Claims

1. A feeding device comprising
a casing (10) including an upper portion (2) with a container (21) to receive a feed therein, said container (21) having a bottom with an outlet (23) and a lower portion (1) with a top plate adjacent to and shielding the outlet (23) of said upper portion (2) from said lower portion (1), said top plate having a first opening (11) extending through said lower portion (1);
a mounting shaft (41) extending vertically in said lower portion (1) and a rotary plate (4) being rotatably mounted to said mounting shaft (41) above said top plate of said lower portion (1) and normally covering the first opening (11) of said top plate, said rotary plate (4) having a second opening (42) formed therethrough set off from the axis of the mounting shaft (41) and substantially equal to the first opening (11) of said top plate in size and
a driving unit (5) for driving said rotary plate (4) an angular distance between a first position where the second opening (42) of said rotary plate (4) is in communication with said outlet (23) of said container (21) of said upper portion (2) and a second position where the second opening (42) of said rotary plate (4) is in communication with the opening of said top plate of said lower portion (1); characterized in that
- a device controls said driving unit at a predetermined time interval to rotate said rotary plate (4);
- said rotary plate (4) further includes a first protrusion (431) and a second protrusion (432) spaced from the first protrusion, each of which extends radially and outwardly from the periphery of said rotary plate (4) and a toothed section formed along the periphery of said rotary plate (4) and spaced from the first and second protrusions (431,432), said driving unit (5) further including two rotation speed reducing gears (52,53) meshed with said toothed section of said rotary plate (4) and in association with said driving unit (5), said control device further including a sensing unit (54) provided on a topmost section of said lower portion (1), and said sensing unit (54) having a clearance (541) therein through which the first and second protrusions (431,432) of said rotary plate (4) pass and
- there are means for detecting a predetermined amount of food provided in said container (21), said detecting means (3) having a micro switch (32) which upon sensing a weight of said food less than a predetermined weight amount gives out a warning signal.

2. A feeding device as claimed in Claim 1, characterized in that said rotary plate (4) further includes a seal retaining grooved recess (46) formed on a lower side of said rotary plate (46), said seal retaining grooved recess being concentrically disposed around said second opening (42) of said rotary plate (4) and into which an O-shaped ring (47) is inserted which seals said first opening (11) of said top plate of said lower portion (1) in a water tight relationship when said rotary plate (4) is at said first position.

3. A feeding device as claimed in Claim 1, characterized in that said feeding device further has a resilient unit (411) provided at a topmost section of said mounting shaft (41) which resilient unit urges said rotary plate (4) to abut against said top plate of said lower portion (1).

4. A feeding device as claimed in Claim 3, characterized in that said resilient device is a compression spring (62).

5. A feeding device as claimed in Claim 1, characterized in that said detecting means (3) is a micro switch.

6. A feeding device as claimed in Claim 1, characterized in that said detecting means (3) is a limit switch.

7. A feeding device as claimed in Claim 1, characterized in that said detecting means (3) further includes an optoelectronic device which detects a volume of said food in said container and converts said volume into weight.

8. A feeding device as claimed in Claim 1, characterized in that said container (21) further includes a cutter disposed at a bottom adjacent to said outlet (23) thereof.

9. A feeding device as claimed in Claim 1, characterized in that said second opening (42) includes a top section adjacent to said outlet (23) of said container, a bottom section adjacent to said top plate and a diameter gradually decreasing from said top section to said bottom section.

## Patentansprüche

1. Abgabevorrichtung umfassend:
ein Gehäuse (10), das über einen oberen Teil (2) mit einem Behälter (21) zur Aufnahme eines Futters hierin verfügt, wobei dieser Behälter (21) einen Boden mit einem Auslaß (23) sowie einen unteren Teil (1) mit einer Kopfplatte benachbart zu dem und abschirmend den Auslaß (23) dieses oberen Teils (2) gegen diesen unteren Teil (1) umfaßt, wobei diese Kopfplatte über eine erste Öffnung (11), die sich durch diesen unteren Teil (1) erstreckt, verfügt;
eine Lagerungswelle (41), die sich vertikal in diesem unteren Teil (1) erstreckt und eine Drehplatte (4), die drehbar an dieser Lagerungswelle (41) oberhalb der Kopfplatte dieses unteren Teils (1) gelagert ist und normalerweise diese erste Öffnung (11) dieser Kopfplatte abdeckt, wobei diese Drehplatte (4) über eine zweite hierdurch gebildete Öffnung (42) verfügt, die gegen die Achse der Lagerungswelle (41) versetzt und im wesentlichen in der Größe gleich der ersten Öffnung (11) dieser Kopfplatte ist und
eine Antriebseinheit (5) zum Antrieb dieser Drehplatte (4) um einen winkelabstand zwischen einer ersten Position, wo die zweite Öffnung (42) dieser Drehplatte (4) sich in Verbindung mit diesem Auslaß (23) dieses Behälters (21) dieses oberen Teils (2) sich befindet sowie einer zweiten Position, wobei die zweite Öffnung (42) dieser Drehplatte (4) sich in Verbindung mit der Öffnung dieser Kopfplatte dieses unteren Teils (1) befindet, **dadurch gekennzeichnet, daß**
eine Einrichtung diese Antriebseinheit bei einem vorbestimmten Zeitintervall zum Drehen dieser Drehplatte (4) regelt
diese Drehplatte (4) weiterhin einen ersten Vorsprung (431) und einen zweiten Vorsprung (432) unter Abstand von dem ersten Vorsprung umfaßt, von denen jeder radial und nach außen vom Umfang dieser Drehplatte (4) sich erstreckt und ein gezahnter Abschnitt längs des Umfangs dieser Drehplatte (4) und unter Abstand von den ersten und zweiten Vorsprüngen (431, 432) vorgesehen ist, wobei diese Antriebseinheit (5) weiterhin zwei die Drehgeschwindigkeit reduzierende Getrieberäder (52, 53) aufweist, die mit diesem Zahnabschnitt dieser Drehplatte (4) kämmen und in Zuordnung zu dieser Antriebseinheit (5) stehen, wobei diese Regeleinrichtung weiterhin eine Sensoreinheit (54) umfaßt, die auf einem obersten Abschnitt dieses unteren Teils (1) vorgesehen ist und wobei diese Sensoreinheit (54) eine Aussparung (541) hierin hat, durch welche diese ersten und zweiten Vorsprünge (431, 432) dieser Drehplatte (4) gehen und
Mittel vorgesehen sind, um eine vorbestimmte Futtermenge zu erfassen, die in diesem Behälter (21) enthalten ist und diese Detektormittel (3) einen Mikroschalter (32) haben, der bei der Erfassung eines Gewichts dieses Futters, das geringer als eine vorbestimmte Gewichtsmenge ist, ein Warnsignal abgibt.

2. Abgabevorrichtung nach Anspruch 1, dadurch gekennzeichnet, daß diese Drehplatte (4) weiterhin eine dichtungshaltende genutete Aussparung (46) umfaßt, die auf einer unteren Seite dieser Drehplatte (46) ausgebildet ist, wobei diese dichtungshaltende genutete Aussparung konzentrisch um diese zweite Öffnung (42) dieser Drehplatte (4) angeordnet ist und in welche ein O-förmiger Ring (47) eingeführt wird, der diese erste Öffnung (11) dieser Kopfplatte dieses unteren Teils (1) wasserdicht abdichtet, wenn diese Drehplatte sich in dieser ersten Position befindet.

3. Abgabevorrichtung nach Anspruch 1, dadurch gekennzeichnet, daß diese Abgabevorrichtung weiterhin eine Federeinheit (411) hat, die an einem obersten Abschnitt dieser Lagerungswelle (41) vorgesehen ist, wobei diese Federungseinheit diese Drehplatte (4) beaufschlagt, damit sie gegen die Kopfplatte dieses unteren Teils (1) anliegt.

4. Abgabevorrichtung nach Anspruch 3, dadurch gekennzeichnet, daß diese Federeinrichtung eine Kompressionsfeder (62) ist.

5. Abgabevorrichtung nach Anspruch 1, dadurch gekennzeichnet, daß dieses Detektormittel (3) ein Mikroschalter ist.

6. Abgabevorrichtung nach Anspruch 1, dadurch gekennzeichnet, daß dieses Detektormittel (3) ein Begrenzungsschalter ist.

7. Abgabevorrichtung nach Anspruch 1, dadurch gekennzeichnet, daß dieses Detektormittel (3) weiterhin eine optoelektronische Einrichtung umfaßt, die ein Volumen dieses Futters in diesem Behälter erfaßt und dieses Volumen in Gewicht umwandelt.

8. Abgabevorrichtung nach Anspruch 1, dadurch gekennzeichnet, daß dieser Behälter (21) weiterhin eine Schneidvorrichtung umfaßt, die an einem Boden benachbart diesem Auslaß (23) hiervon angeordnet ist.

9. Abgabevorrichtung nach Anspruch 1, dadurch gekennzeichnet, daß diese zweite Öffnung (42) einen Kopfabschnitt benachbart diesem Auslaß (23) dieses Behälters, einen Bodenabschnitt benachbart dieser Kopfplatte und einen Durchmesser aufweist, der allmählich von diesem Kopfabschnitt zu diesem Bodenabschnitt abnimmt.

## Revendications

1. Distributeur de nourriture comprenant :
un boîtier (10) comportant une partie supérieure (2) avec un réservoir (21) destiné à recevoir de la nourriture, ledit réservoir (21) ayant un fond muni d'un orifice de sortie (23), et une partie inférieure (1) avec une plaque de dessus à proximité immédiate de l'orifice de sortie (23) de ladite partie supérieure (2) et obturant cet orifice par rapport à ladite partie inférieure (1), ladite plaque de dessus comportant une première ouverture (11) s'étendant à travers ladite partie inférieure (1),
un arbre de montage (41) s'étendant verticalement dans ladite partie inférieure (1) et un plateau rotatif (4) monté avec faculté de rotation sur ledit arbre de montage (41) au-dessus de ladite plaque de dessus de ladite partie inférieure (1) et recouvrant normalement la première ouverture (11) de ladite plaque de dessus, ledit plateau rotatif (4) comportant une seconde ouverture (42) formée à travers lui décalée de l'axe de l'arbre de montage (41) et sensiblement égale en dimension à la première ouverture (11) de ladite plaque de dessus, et
une unité d'entraînement (5) pour entraîner ledit plateau rotatif (4) sur une distance angulaire entre une première position dans laquelle la seconde ouverture (42) dudit plateau rotatif (4) communique avec ledit orifice de sortie (23) dudit réservoir (21) de ladite partie supérieure (2) et une seconde position dans laquelle la seconde ouverture (42) dudit plateau rotatif (4) communique avec l'ouverture de ladite plaque de dessus de ladite partie inférieure (1), caractérisé en ce que
- un dispositif commande ladite unité d'entraînement à un intervalle de temps prédéterminé afin de faire tourner ledit plateau rotatif (4),
- ledit plateau rotatif (4) comprend en outre une première protubérance (431) et une seconde protubérance (432) espacée de la première protubérance, dont chacune s'étend radialement et vers l'extérieur à partir de la périphérie dudit plateau rotatif (4), et une partie dentée formée le long de la périphérie dudit plateau rotatif (4) et espacée des première et seconde protubérances (431, 432), ladite unité d'entraînement (5) comportant en outre deux pignons (52, 53) de réduction de la vitesse de rotation engrenés avec ladite partie dentée dudit plateau rotatif (4) et associés à ladite unité d'entraînement (5), ledit dispositif de commande comprenant en outre une unité de détection (54) prévue sur une partie la plus élevée de ladite partie inférieure (1), et ladite unité de détection (54) comportant un évidement (541) à travers lequel passent les première et seconde protubérances (431, 432) dudit plateau rotatif (4), et
- des moyens sont prévus pour détecter une quantité prédéterminée de nourriture présente dans ledit réservoir (21), lesdits moyens de détection (3) comportant un micro-interrupteur (32) qui, lorsqu'il détecte un poids de ladite nourriture inférieur à une valeur de poids prédéterminée, émet un signal d'avertissement.

2. Distributeur de nourriture selon la revendication 1, caractérisé en ce que ledit plateau rotatif (4) comporte en outre un évidement en rainure de retenue de joint (46) formé sur un côté inférieur dudit plateau rotatif (4), ledit évidement en rainure de retenue de joint étant disposé de manière concentrique autour de ladite seconde ouverture (42) dudit plateau rotatif (4) et dans lequel est inséré un joint torique (47) qui établit avec ladite première ouverture (11) de ladite plaque de dessus de ladite partie inférieure (1) une relation d'étanchéité à l'eau lorsque ledit plateau rotatif (4) est à ladite première position.

3. Distributeur de nourriture selon la revendication 1, caractérisé en ce que le distributeur de nourriture comprend en outre un élément élastique (411) prévu au niveau d'une partie de sommet dudit arbre de montage (41), élément élastique qui pousse ledit plateau rotatif (4) de manière à buter contre ladite plaque de dessus de ladite partie inférieure (1).

4. Distributeur de nourriture selon la revendication 3, caractérisé en ce que ledit élément élastique est un ressort de compression (62).

5. Distributeur de nourriture selon la revendication 1, caractérisé en ce que ledit moyen de détection (3) est un micro-interrupteur.

6. Distributeur de nourriture selon la revendication 1, caractérisé en ce que ledit moyen de détection (3) est un contact de fin de course.

7. Distributeur de nourriture selon la revendication 1, caractérisé en ce que ledit moyen de détection (3) comprend en outre un dispositif optoélectronique qui détecte le volume de ladite nourriture dans ledit réservoir et convertit ledit volume en poids.

8. Distributeur de nourriture selon la revendication 1, caractérisé en ce que ledit réservoir (21) comprend en outre un dispositif de coupe disposé au niveau d'une partie de fond à proximité immédiate de son orifice de sortie (23).

9. Distributeur de nourriture selon la revendication 1, caractérisé en ce que ladite seconde ouverture (42) comprend une section supérieure à proximité immédiate dudit orifice de sortie (23) dudit réservoir, une section inférieure à proximité immédiate de ladite plaque de dessus et un diamètre diminuant progressivement depuis ladite section supérieure jusqu'à ladite section inférieure.
